Europäisches Patentamt

European Patent Office

Office européen des brevets

(19)

(11) Numéro de publication : **0 197 570**
**B1**

(12) **FASCICULE DE BREVET EUROPÉEN**

(45) Date de publication du fascicule du brevet :
27.07.88

(51) Int. Cl.⁴ : **B 64 B  1/58**

(21) Numéro de dépôt : **86200285.4**

(22) Date de dépôt : **25.02.86**

(54) Procédé et dispositif d'accrochage d'une enveloppe sur une pièce de fixation.

(30) Priorité : 12.04.85 FR 8505674

(43) Date de publication de la demande :
15.10.86 Bulletin 86/42

(45) Mention de la délivrance du brevet :
27.07.88 Bulletin 88/30

(84) Etats contractants désignés :
BE CH DE FR GB IT LI LU NL

(56) Documents cités :
US-A- 2 779 554
US-A- 2 990 147

(73) Titulaire : **CENTRE NATIONAL D'ETUDES SPATIALES (C.N.E.S.) Etablissement public, scientifique et technique à caractère industriel et commercial 2, place Maurice-Quentin**
**F-75039 Paris Cédex 01 (FR)**

(72) Inventeur : **Regipa, Robert**
**226, av.Saint-Exupéry Bâtiment Provence**
**F-31400 Toulouse (FR)**

(74) Mandataire : **Barre, Philippe et al**
**Cabinet Barre-Gatti-Laforgue 95 rue des Amidonniers**
**F-31069 Toulouse Cédex (FR)**

EP 0 197 570 B1

Jouve, 18, rue St-Denis, 75001 Paris, France

## Description

L'invention concerne un procédé d'accrochage d'une enveloppe réalisée au moyen d'une gaine en matériau souple sur une pièce de fixation. Elle s'étend à un dispositif d'accrochage d'une enveloppe sur une pièce de fixation, mettant en œuvre ce procédé.

L'invention s'applique en particulier à l'accrochage de l'enveloppe d'un ballon spatial sur des pièces de fixation situées sur l'axe de cette enveloppe et définissant le pôle supérieur et respectivement inférieur de celle-ci.

Les programmes actuels de recherche, dans le domaine des ballons spatiaux, tendent au développement de ballons scientifiques présentant une forme générale cylindrique. L'enveloppe de ces ballons est un cylindre sans fond réalisé par exemple conformément au procédé décrit dans le brevet FR 2 472 971 au nom du demandeur, c'est-à-dire par l'assemblage de N fuseaux parallèles. Le ballon est réalisé en rassemblant les extrémités du cylindre après fronçage de celles-ci au niveau de pièces polaires positionnées sur l'axe de l'enveloppe et destinées à assurer la reprise mécanique des contraintes longitudinales. Les dispositifs d'accrochage des enveloppes sur ces pièces polaires doivent donc être étudiés avec soin afin d'assurer correctement la reprise des tensions longitudinales sollicitant l'enveloppe et l'étanchéité des ballons spatiaux.

L'étude de ces dispositifs d'accrochage est d'autant plus importante que ces enveloppes de forme cylindrique constituent l'architecture de base de ballons à grand volume, aptes à transporter des charges importantes. A cet effet, la structure de rétention des gaz de ces ballons doit être capable de supporter de très fortes surpressions en vue de permettre leur pilotage aérostatique par variation de leur masse gazeuse. Ces ballons, tels que décrits dans le brevet français déposé sous le n° 84.18798 au nom du demandeur, sont constitués d'une enveloppe externe garantissant la tenue à la surpression et de une ou plusieurs enveloppes internes servant de réservoir d'hélium. Les tensions développées par la surpression sont reprises par l'enveloppe externe, par des réseaux de renforts longitudinaux et circonférentiels et par un lien interpolaire reliant les deux pôles de l'enveloppe. La répartition des efforts entre ces différents éléments permet ainsi d'atteindre des surpressions très élevées de l'ordre de 500 à 600 millibars. Il est à remarquer l'absence de liaisons mécaniques importantes en dehors des pièces polaires, ce qui permet des comportements structuraux très proches des résultats théoriques et donc la possibilité de travailler avec des facteurs de sécurité réalistes, à condition toutefois de pouvoir réaliser des dispositifs d'accrochage de l'enveloppe sur les pièces polaires très fiables. Ces dispositifs d'accrochage doivent être capables, en outre, d'assurer la reprise de tensions longitudinales sollicitant les enveloppes internes en assurant une étanchéité parfaite vis-à-vis de l'hélium.

Parmi les solutions proposées, on peut citer le dispositif d'accrochage décrit dans le brevet US-A-2.779.554. Ce brevet décrit un procédé pour l'accrochage d'une gaine souple sur une pièce de fixation annulaire réalisée en un matériau rigide et possédant une face périphérique externe dotée d'une gorge annulaire destinée à servir de logement de blocage d'une extrémité de la gaine. Le blocage est, quant à lui, assuré au moyen d'un collier de serrage logé dans la gorge annulaire et maintenant l'extrémité de la gaine pincée entre ce collier et la pièce de fixation. Maigré sa fiabilité, ce dispositif d'accrochage ne permet pas d'assurer la reprise de tensions longitudinales importantes sollicitant l'enveloppe. En effet, ces tensions sont uniquement transmises à la pièce de fixation par frottement et il s'ensuit un glissement obligatoire au-delà d'un seuil donné. Ceci est d'autant plus vrai lorsque la gaine est constituée d'une chaîne longitudinale composée de fils résistants, revêtue de part et d'autre de deux films de protection. Dans ce cas, en effet, le frottement qui agit sur les films externes du complexe et non sur les fils résistants de la chaîne, ne peut assurer le maintien de la tension importante que peut admettre ces fils résistants. Il s'ensuit donc un glissement obligatoire.

La présente invention se propose d'apporter une solution aux problèmes ci-dessus évoqués et de fournir un dispositif pour l'accrochage des enveloppes apte à remplir correctement ses fonctions mécaniques et ses fonctions d'étanchéité.

A cet effet, l'objectif essentiel de l'invention est de fournir un procédé pour l'accrochage d'une enveloppe sur une pièce de fixation permettant la reprise d'efforts très importants, tout en assurant l'étanchéité de cette enveloppe.

Un autre objectif de l'invention est de fournir un procédé pour l'accrochage d'une enveloppe resserrée autour d'une pièce de fixation grâce au fronçage d'une portion de sa gaine, ce procédé permettant l'homogénéisation des contraintes dans la portion froncée de cette enveloppe.

Un autre objectif est de fournir un procédé pour l'accrochage sur une pièce de fixation des renforts longitudinaux externes d'une enveloppe permettant la reprise d'efforts importants.

Le procédé conforme à l'invention est destiné à l'accrochage d'une enveloppe réalisée au moyen d'une gaine en matériau souple sur une pièce de fixation, et est du type consistant :

— à utiliser une pièce de fixation réalisée au moyen d'un matériau rigide et ayant une face périphérique externe pourvue d'une gorge annulaire,

— à resserrer la gaine au niveau de la pièce de fixation et à la bloquer, de façon qu'elle épouse la forme de la gorge de ladite pièce de fixation, au moyen d'un collier de serrage.

Selon la présente invention, ce procédé consiste :

— à utiliser un collier de serrage réalisé en un matériau peu extensible, de haute résistance à la traction et de section adaptée pour emplir la gorge annulaire sur une profondeur déterminée,

— à disposer en contact avec la face périphérique externe du collier de serrage, un joint annulaire s'étendant sur tout le pourtour dudit collier et apte à subir des déformations radiales en compression en vue de fournir au collier de serrage un degré de liberté par rapport aux faces latérales de la gorge, évitant le travail dudit collier en compression.

(Par « annulaire », on entend définir des objets ayant une forme générale circulaire ou possédant une toute autre forme générale).

Ainsi, la tension longitudinale subie par l'enveloppe lors de sa mise en pression entraîne la sollicitation du collier de serrage suivant sa direction préférentielle de déformation. En effet, cette tension longitudinale se transforme au niveau du dispositif d'accrochage en tension circonférentielle qui sollicite le collier de serrage en traction.

Selon un mode de mise en œuvre préférentiel, le joint annulaire est maintenu au niveau de sa face périphérique externe par une sangle de maintien réalisée en un matériau peu extensible, de haute résistance à la traction destinée à guider la déformation dudit joint annulaire selon une direction préférentielle tendant à exercer une pression sur les parois latérales de la gorge annulaire.

Ainsi, la déformation du joint annulaire qui augmente avec l'effort de tension longitudinale sollicitant l'enveloppe assure une étanchéité de l'enveloppe croissant en fonction de cette déformation.

Ce procédé s'applique en particulier pour l'accrochage d'une enveloppe dont une portion de gaine est froncée afin de permettre son resserrement autour d'une pièce de fixation. Selon la présente invention, ledit procédé consiste à revêtir la face interne et la face externe de la portion de gaine destinée à être logée dans la gorge annulaire de couches d'uniformisation de l'épaisseur froncée de l'enveloppe, en vue d'homogénéiser les contraintes dans ladite enveloppe. De préférence, chaque couche d'uniformisation est obtenue par la fusion de films en matière thermoplastique disposés dans la gorge annulaire de la pièce de fixation et sur la face externe de l'enveloppe froncée.

Ce mode de mise en œuvre permet d'assurer l'étanchéité de l'enveloppe et évite la création de surtensions locales dans la portion froncée et par conséquent non homogène de l'enveloppe.

Ce procédé s'applique également pour l'accrochage sur une pièce de fixation des extrémités d'une enveloppe pourvue d'un bourrelet réalisé sur ses bords extrêmes. Selon la présente invention, ce bourrelet est maintenu contre la face périphérique externe de la pièce de fixation au moyen de la sangle de maintien, son blocage étant assuré par la pression exercée sur la tête de ce bourrelet par le joint annulaire lors de sa déformation.

Ce bourrelet est réalisé préférentiellement en repliant le bord extrême de l'enveloppe sur lui-même, sur plusieurs épaisseurs. Il peut également, selon un autre mode de réalisation, être préformé.

Lors de la mise en tension de l'enveloppe, le collier de serrage est soumis à un effort dissymétrique qui tend à entraîner sa sollicitation en torsion et à provoquer son frottement sur une face latérale de la gorge annulaire. La présence du joint annulaire permet de fournir un degré de liberté par rapport à cette zone de contact qui évite le frottement du collier de serrage et ainsi sa sollicitation en compression. Ce degré de liberté permet de plus l'uniformisation de contraintes dans la section transversale du collier de serrage entraînant le travail dans des conditions optimales dudit collier.

Selon un mode de réalisation préféré, une portion de la face périphérique externe du joint annulaire est maintenue précomprimée par une bague de serrage réalisée en un matériau peu extensible, de haute résistance à la traction, en vue de créer une direction préférentielle de déformation du joint annulaire tendant à exercer une pression sur la tête du bourrelet assurant le blocage de celui-ci.

Comme précédemment, ce procédé permet d'assurer une étanchéité de l'enveloppe croissant avec l'effort sollicitant celle-ci. Il permet également d'assurer le blocage des extrémités d'une enveloppe soumise à de très importantes tensions longitudinales. Ce blocage du bourrelet dans une position géométrique déterminée permet de définir parfaitement la longueur des différents fuseaux composant l'enveloppe et entraîne ainsi une répartition uniforme des contraintes sur la périphérie de l'enveloppe.

Ce procédé permet également l'accrochage sur une pièce de fixation annulaire d'un réseau de renforts s'étendant longitudinalement le long d'une enveloppe. Selon la présente invention, le procédé consiste alors :

— à accrocher les renforts longitudinaux sur une jante en matériau rigide et ayant une face périphérique externe pourvue d'une gorge annulaire, ladite jante étant fixée concentriquement autour de la pièce de fixation,

— à disposer dans la gorge annulaire de la jante un collier de serrage réalisé en un matériau peu extensible de haute résistance à la traction et de forme conjuguée de la gorge en vue de reprendre les efforts longitudinaux subis par les renforts par la mise en tension du collier de serrage.

Les efforts longitudinaux sollicitant les renforts de l'enveloppe entraînent la mise en tension du collier de serrage disposé dans la gorge annulaire de la jante. La forme de révolution de cette jante permet de plus un auto-équilibrage des efforts au niveau du collier de serrage et donc la transmission d'efforts faibles au niveau de la pièce de fixation.

L'invention s'étend à un dispositif pour l'accrochage d'une enveloppe réalisée au moyen d'une gaine souple sur une pièce de fixation, ledit dispositif étant du type comprenant :

— une pièce de fixation annulaire réalisée en un matériau rigide et ayant une face périphérique externe pourvue d'une gorge annulaire en vue de servir de logement de blocage de la gaine,

— un collier de serrage de la gaine disposé dans la gorge annulaire.

Selon la présente invention, ce dispositif se caractérise en ce que :

— le collier de serrage est constitué par un câble en un matériau peu extensible de haute résistance à la traction enroulé à l'intérieur et sur une profondeur déterminée de ladite gorge,

— un joint annulaire est disposé dans la gorge autour de la face périphérique externe du collier de serrage,

— une sangle de maintien est disposée autour du joint annulaire, ladite sangle de maintien étant constituée par un ruban en un matériau peu extensible de haute résistance à la traction, enroulé autour du joint annulaire.

D'autres caractéristiques, buts et avantages de l'invention se dégageront de la description détaillée qui suit et de l'examen des dessins annexés qui en présentent, à titre d'exemples non limitatifs, deux modes de réalisation préférentiels. Sur ces dessins qui font partie intégrante de la description :

— la figure 1 est une vue en perspective d'un dispositif d'accrochage d'une enveloppe sur une pièce de fixation conforme à l'invention,

— la figure 2 en est une coupe partielle suivant un plan transversal,

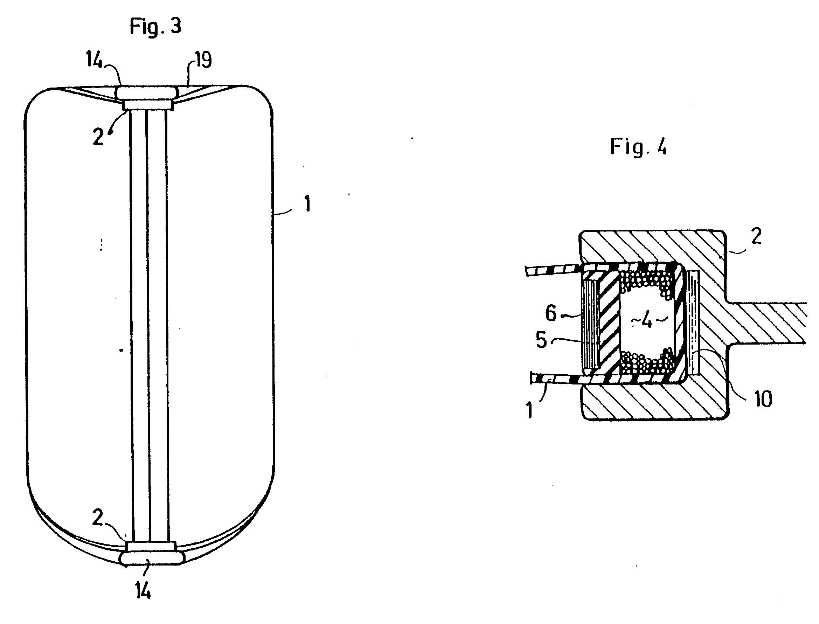

— la figure 3 est une coupe longitudinale d'une enveloppe munie de renforts longitudinaux et dont les extrémités sont accrochées sur les pièces polaires au moyen du dispositif d'accrochage,

— la figure 4 est une coupe partielle schématique d'un dispositif d'accrochage utilisé pour la réalisation de deux enveloppes superposées à partir d'une gaine unique.

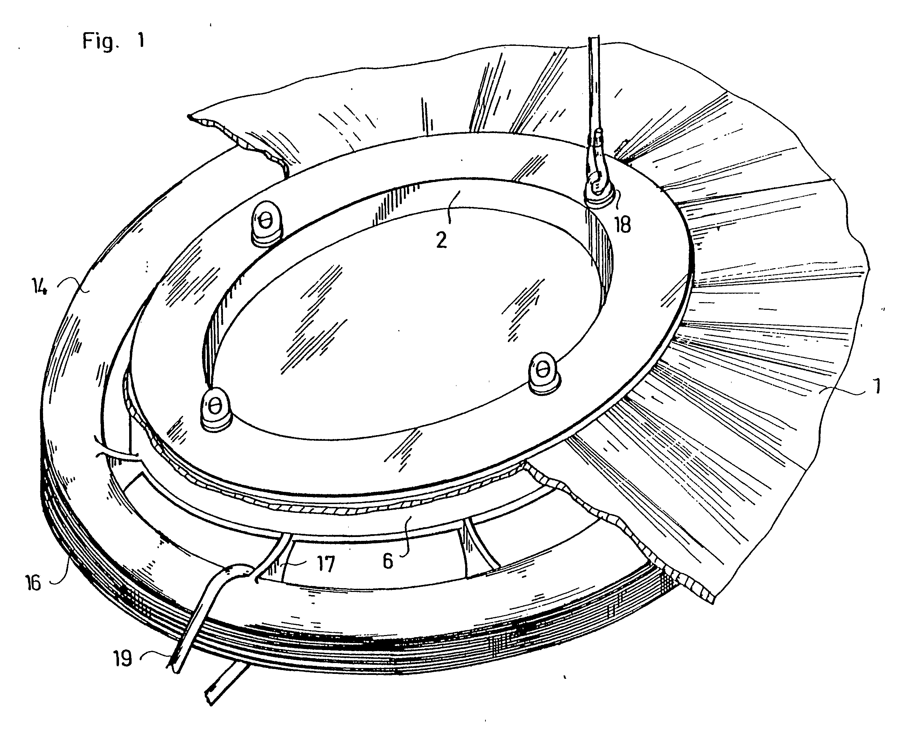

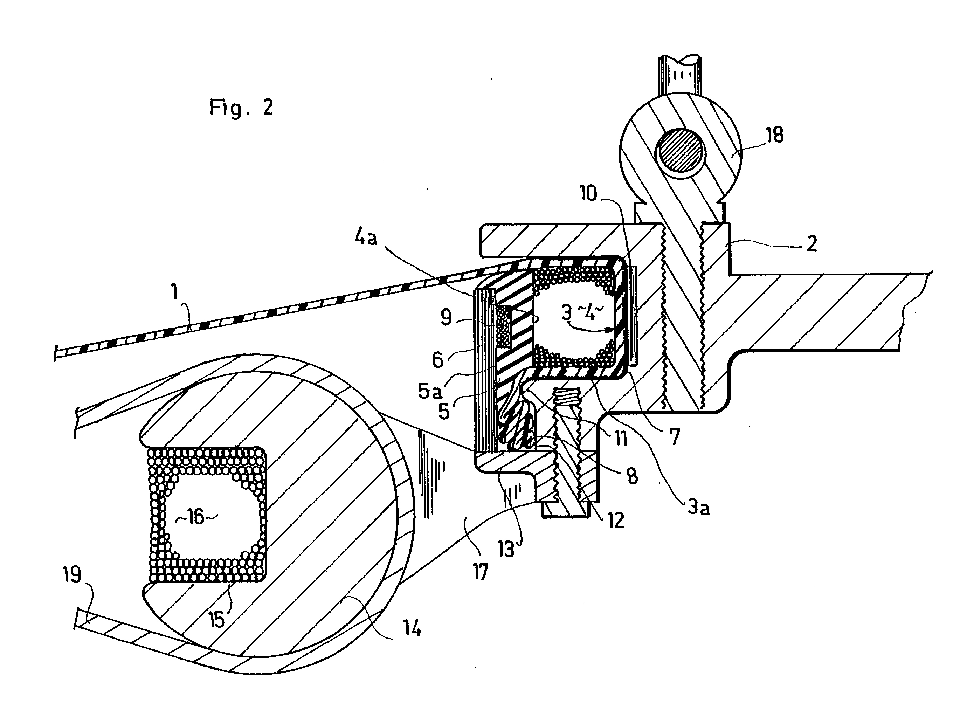

Le dispositif d'accrochage représenté à titre d'exemple aux figures 1 et 2 est destiné à l'accrochage des extrémités d'une enveloppe sur une pièce de fixation située dans l'axe de celle-ci. Il s'applique en particulier à l'accrochage des extrémités d'une enveloppe de ballon spatial 1 de forme générale cylindrique sur des pièces polaires disposées aux pôles, inférieur et supérieur, de l'enveloppe sur l'axe de celle-ci.

Cette enveloppe telle que, par exemple, décrite dans le brevet FR déposé sous le n° 84.18798, est composée d'un matériau composite comprenant une chaîne longitudinale en « Kevlar », une trame circonférentielle en « polyester », un film extérieur en polyéthylène et un film intérieur en polyester.

Ce dispositif comprend une pièce de fixation 2 de forme annulaire réalisée en un matériau rigide. Cette pièce de fixation est munie sur sa face périphérique externe d'une gorge annulaire 3. Une des faces latérales 3a de cette gorge comprend dans son prolongement un bossage 11 délimitant sur la face périphérique externe de la pièce de fixation une rainure annulaire 12. Cette rainure est délimitée, d'une part, par le bossage, et d'autre part, par une bague de butée 13 annulaire adaptée pour être fixée sur la face externe de la pièce de fixation 2 orthogonalement à celle-ci en vue de servir de butée latérale à la rainure 12.

Cette pièce de fixation 2 comprend, en outre, noyée dans le fond de la gorge 3 annulaire une résistance chauffante 10 destinée à la fusion d'un film 7 de polyéthylène de 1 à 2 millimètres d'épaisseur disposé à l'intérieur de cette gorge.

La température de cette résistance est régulée de façon à permettre l'échauffement des parois délimitant la gorge de la pièce de fixation à une température comprise approximativement entre 140° et 160 °C, température correspondant à la température de fusion du polyéthylène.

L'obtention de cette température permet, outre la fusion du film 7 précité, la fusion du film extérieur à base de polyéthylène constituant l'enveloppe. Il est à noter que cette température n'altère pas les autres couches constitutives de l'enveloppe, les températures de fusion des matériaux constituant ces couches étant supérieures à la température de fusion du polyéthylène.

Sur cette pièce de fixation sont rassemblées les portions extrêmes froncées de l'enveloppe 1 de forme générale cylindrique et dont les bords extrêmes sont solidaires d'un bourrelet 8 annulaire.

Les extrémités de cette enveloppe 1 sont disposées dans la gorge annulaire 3 de façon que le bourrelet annulaire 8 soit positionné dans la rainure 12. Le blocage de cette enveloppe est assuré par l'enroulement dans la gorge 3 d'un câble 4 en matériau peu extensible de haute résistante à la traction, par exemple du type « Kevlar ». Ce câble, à faible allongement relatif (maximum 2 à 4 % à la rupture) est imprégné d'une résine de collage destinée à permettre le parfait agencement des fibres les unes par rapport aux autres et il est enroulé dans la gorge annulaire 3 sur une profondeur déterminée de celle-ci.

Autour de ce câble est disposé un joint annulaire 5 constitué par un élastomère de faible dureté. Ce joint annulaire est maintenu précomprimé contre la face périphérique externe 4a du collier constitué par le câble 4 par l'enroulement autour de sa face périphérique 5a d'un deuxième câble 9 en matériau similaire du type « Kevlar » et comme le précédent imprégné d'une résine de collage. Ce câble est enroulé autour du joint annulaire 5 de façon à assurer sa précompression et à créer une direction préférentielle de déformation de ce joint apte à entraîner une pression sur le bossage 11.

L'ensemble ci-dessus décrit est maintenu autour de la pièce de fixation 2 par une sangle 6 constituée par l'enroulement autour du joint annulaire 5 d'un ruban en matériau peu extensible de haute résistance à la traction, du type « Kevlar ». Cette sangle assure, d'une part, le maintien du bourrelet annulaire 8 contre le fond de la rainure 12 de la pièce de fixation 2, et d'autre part, le maintien du joint annulaire 5 et son guidage lors de sa déformation. De plus, cette sangle est munie sur sa face externe d'une protection destinée à préserver le dispositif contre un vieillissement prématuré.

Lors de la mise en tension de l'enveloppe 1, les efforts subis par celle-ci provoquent la mise en tension circonférentielle de l'ensemble du câble 4. Les tensions radiales que subit le fond froncé de l'enveloppe tendent alors à créer des sollicitations différentielles entre les différentes spires formant ce câble 4 et à provoquer ainsi le frottement de ces spires les unes par rapport aux autres. La présence du joint annulaire 5, en fournissant un degré de liberté à l'ensemble du câble par rapport à la face latérale de la gorge 3 annulaire, permet l'uniformisation des contraintes dans les différentes spires et évite donc leur sollicitation en compression.

De plus, ce joint annulaire lors de sa déformation, exerce une pression sur le bossage 11 de la pièce de fixation 2 et sur la tête du bourrelet 8 de l'enveloppe assurant, d'une part, le blocage du bourrelet contre la face externe périphérique de la pièce de fixation et, d'autre part, l'étanchéité de l'enveloppe 1 grâce à la pression exercée sur le bossage. Ce bossage permet donc notamment de définir exactement la position géométrique du bourrelet. La longueur des différentes fibres de « Kevlar » constituant la chaîne de l'enveloppe, peut donc être déterminée avec exactitude, autorisant la confection d'une enveloppe sollicitée uniformément sur toute sa périphérie lors de sa mise en tension.

De plus, lors de la mise en tension de l'enveloppe 1, la résistance chauffante 10 provoque la fusion du film 7 de polyéthylène disposé dans la gorge 3 et du film externe de l'enveloppe jusqu'à constitution de couches d'uniformisation de l'épaisseur des fronces créées par le fronçage dè la gaine.

La fusion du film de polyéthylène constituant le revêtement externe de l'enveloppe entraîne la soudure sur elles-mêmes des différentes fronces de l'enveloppe. La fusion de ce film, conjuguée à la fusion du film 7 disposé dans la gorge, permet donc d'obtenir une portion de gaine étanche et isotrope vis-à-vis des efforts de tensions longitudinaux, et garantit l'homogénéisation des contraintes dans toute l'enveloppe.

Ce dispositif, lorsqu'il est utilisé pour l'accrochage d'une enveloppe dotée de renforts 19 extérieurs longitudinaux, comprend une jante 14 en matière rigide. Cette jante est dotée, sur sa face périphérique externe, d'une gorge annulaire 15 à l'intérieur de laquelle on enroule un câble 16 en matériau peu extensible de haute résistance, du type « Kevlar ». De diamètre supérieur au diamètre de la pièce de fixation 2, cette jante est fixée concentriquement à cette pièce par l'intermédiaire de bras 17 radiaux, solidaires d'une part de la jante et, d'autre part de la butée 13 annulaire de la pièce de fixation.

L'accrochage des renforts 19 longitudinaux consiste à fixer ceux-ci sur la jante 14. La mise en tension des renforts 19 entraîne ainsi la mise en tension circonférentielle du câble 16 apte à reprendre des efforts importants.

En outre, la forme annulaire de la jante 14 et donc du câble 16 entraîne un auto-équilibrage des efforts au niveau de cet ensemble. Les efforts transmis par ce dispositif à la pièce de fixation 2 sont donc faibles et ne peuvent engendrer aucun désordre au niveau de cette pièce de fixation.

Ce dispositif peut, comme décrit ci-dessus, être utilisé comme pièce polaire de l'enveloppe externe d'un ballon spatial. A cet effet, la pièce de fixation est munie de moyens d'admission et d'évacuation d'air et également de moyens d'admission et d'évacuation d'hélium pour les ballons dotés d'enveloppes internes. De plus, cette pièce polaire comporte des moyens d'accrochage 18 d'un faisceau de bandes formant le lien interpolaire.

Ce dispositif peut également être utilisé comme pièce interpolaire de ballons spatiaux comprenant plusieurs enveloppes internes superposées. Ces enveloppes peuvent être constituées de plusieurs enveloppes séparées ou de manière avantageuse à partir d'une gaine unique serrée au niveau des pôles intermédiaires des enveloppes internes sur les pièces polaires ci-dessus décrites. Il est à noter que les tensions longitudinales subies par ces enveloppes étant moindres, le deuxième enroulement de câble 9 n'est pas nécessaire. Le guidage de la déformation du joint annulaire 5 est alors assuré par la sangle 6, l'étanchéité étant garantie par la pression exercée par ce joint annulaire sur les faces latérales 3a de la gorge 3 annulaire.

## Revendications

1. Procédé pour l'accrochage d'une enveloppe réalisée au moyen d'une gaine (1) en matériau souple sur une pièce de fixation, du type consistant :

— à utiliser une pièce de fixation (2) réalisée au moyen d'un matériau rigide et ayant une face périphérique externe pourvue d'une gorge (3) annulaire,

— à resserrer la gaine au niveau de la pièce de fixation (2) et à la bloquer, de façon qu'elle épouse la forme de la gorge (3) de ladite pièce de fixation, au moyen d'un collier (4) de serrage, ledit procédé étant caractérisé en ce que :

— on utilise un collier de serrage (4) réalisé en un matériau peu extensible de haute résistance à la traction et de section adaptée pour emplir la gorge annulaire sur une profondeur déterminée,

— on dispose en contact avec la face périphérique externe (4a) du collier (4) de serrage, un joint annulaire (5) s'étendant sur tout le pourtour dudit collier et apte à subir des déformations radiales en compression en vue de fournir au collier de serrage un degré de liberté par rapport aux faces latérales (3a) de la gorge (3) évitant le travail dudit collier en compression.

2. Procédé selon la revendication 1, caractérisé en ce que le joint annulaire (5) est maintenu sur tout le pourtour de sa face périphérique externe (5a) par une sangle (6) de maintien réalisée en un matériau peu extensible de haute résistance à la traction et destinée à guider la déformation dudit joint annulaire, selon une direction préférentielle tendant à exercer une pression sur les parois latérales (3a) de la gorge (3) annulaire.

3. Procédé selon l'une des revendications 1 ou 2, dans lequel le resserrement de la gaine au niveau de la pièce de fixation est réalisé grâce au fronçage d'une portion de ladite gaine, ledit procédé étant caractérisé en ce qu'il consiste à revêtir la face interne et la face externe de la portion de gaine destinée à être logé dans la gorge (3) annulaire de couches d'uniformisation de l'épaisseur froncée de l'enveloppe en vue d'homogénéiser les contraintes dans ladite enveloppe.

4. Procédé selon la revendication 3, caractérisé en ce que chaque couche d'uniformisation est obtenue par la fusion à chaud de films en matière thermoplastique disposés respectivement dans la gorge (3) annulaire de la pièce de fixation et sur la face externe de l'enveloppe froncée.

5. Procédé selon la revendication 4, dans lequel le matériau constitutif de l'enveloppe est un matériau composite, dont la face externe est constituée d'un film souple thermoplastique, ledit dispositif étant caractérisé en ce que la couche d'uniformisation revêtant la face externe de l'enveloppe est obtenue par fusion à chaud dudit film thermoplastique.

6. Procédé selon l'une des revendications précédentes, appliqué à l'accrochage d'une enveloppe sur une pièce polaire en vue de la réalisation d'enveloppes internes superposées à partir d'une gaine unique positionnée à l'intérieur de l'enveloppe externe d'un ballon aérostatique.

7. Procédé selon l'une des revendications 2, 3, 4 ou 5 pour l'accrochage des extrémités d'une enveloppe sur une pièce de fixation (2) dans lequel un bourrelet (8) est réalisé sur le bord extrême de l'enveloppe ledit procédé étant caractérisé en ce que ledit bourrelet est maintenu contre la face périphérique externe de la pièce de fixation au moyen de la sangle (6) de maintien, son blocage étant assuré par la pression exercée sur la tête de ce bourrelet par le joint annulaire (5).

8. Procédé selon la revendication 7, caractérisé en ce que le bourrelet (8) est réalisé en repliant le bord extrême de l'enveloppe sur lui-même et sur plusieurs épaisseurs.

9. Procédé selon l'une des revendications 7 ou 8, caractérisé en ce qu'une portion de la face périphérique externe (5a) du joint annulaire (5) est maintenue pré-comprimée par une bague de serrage (9) annulaire, réalisée en un matériau peu extensible de haute résistance à la traction, en vue de créer une direction préférentielle de déformation du joint annulaire tendant à exercer une pression sur la tête du bourrelet (8) assurant le blocage de celui-ci.

10. Procédé selon l'une des revendications précédentes pour l'accrochage sur une pièce de fixation annulaire (2) d'un réseau de renforts (19) s'étendant longitudinalement le long d'une enveloppe, ledit procédé étant caractérisé en ce qu'il consiste :
— à accrocher les renforts (19) longitudinaux sur une jante (14) en matériau rigide et ayant une face périphérique externe pourvue d'une gorge (15) annulaire, ladite jante étant fixée concentriquement autour de la pièce de fixation (2),
— à disposer dans la gorge (15) annulaire de la jante (14) un collier (16) de serrage réalisé en un matériau peu extensible de haute résistance à la traction et de forme conjuguée de la gorge (15) en vue de reprendre les efforts longitudinaux subis par les renforts (19) par la mise en tension du collier de serrage.

11. Procédé selon l'une des revendications précédentes, caractérisé en ce que les colliers (4, 16) de serrage, et la bague de serrage (9) sont obtenus par l'enroulement à l'intérieur des gorges annulaires respectives (3, 15) et autour du joint annulaire (5), de câbles en un matériau peu extensible de haute résistance à la traction.

12. Procédé selon l'une des revendications précédentes caractérisé en ce que la sangle (6) de maintien est obtenue par l'enroulement autour du joint annulaire (5) d'un ruban en un matériau peu extensible de haute résistance à la traction.

13. Procédé selon l'une des revendications précédentes, appliqué à l'accrochage sur une pièce polaire des extrémités de l'enveloppe d'un ballon spatial de forme générale cylindrique.

14. Dispositif pour l'accrochage d'une enveloppe (1) réalisée au moyen d'une gaine souple sur une pièce de fixation (2), ledit dispositif étant du type comprenant :
— une pièce de fixation (2) annulaire réalisée en un matériau rigide et ayant une face périphérique externe pourvue d'une gorge (3) annulaire destinée à servir de logement de blocage de la gaine,
— un collier (4) de serrage de la gaine disposé dans la gorge (3) annulaire, ledit dispositif étant caractérisé en ce que :
— le collier de serrage (4) est constitué par un câble en un matériau peu extensible de haute résistance à la traction, enroulé à l'intérieur et sur une profondeur déterminée de ladite gorge,
— un joint annulaire (5) est disposé dans la gorge autour de la face périphérique externe (4a) du collier de serrage (4),
— une sangle de maintien (6) est disposée autour du joint annulaire (5), ladite sangle de maintien (6) étant constituée par un ruban en un matériau peu extensible de haute résistance à la traction, enroulé autour du joint annulaire (5).

15. Dispositif selon la revendication 14, pour l'accrochage sur une pièce de fixation (2) d'une enveloppe resserrée autour de ladite pièce de fixation grâce au fronçage d'une portion de la gaine, ledit dispositif étant caractérisé en ce que la pièce de fixation (2) comprend des moyens de chauffage (10) disposés à proximité du fond (3b) de la gorge (3) et aptes à provoquer la fusion de films (7) en matière thermoplastique disposés respectivement dans ladite gorge et sur la face externe de l'enveloppe froncée.

16. Dispositif selon la revendication 15, caractérisé en ce que les moyens de chauffage (10) sont constitués d'une résistance électrique noyée dans le fonds de la gorge annulaire (3).

17. Dispositif selon l'une des revendications 14, 15 ou 16, pour l'accrochage sur une pièce de fixation (2) des extrémités d'une enveloppe munie au niveau de ses bords extrêmes d'un bourrelet annulaire (8), ledit dispositif étant caractérisé en ce que :
— la pièce de fixation (2) comprend dans le prolongement d'une des faces latérales (3a) de la gorge (3) annulaire un bossage (11) délimitant sur la face périphérique externe de ladite pièce de fixation une rainure (12) adaptée pour servir de logement au bourrelet annulaire (8),
— la sangle de maintien (6) est de largeur adaptée pour maintenir le joint annulaire (5) et le bourrelet annulaire (8) contre la face périphérique externe de fixation (2).

18. Dispositif selon la revendication 17, caractérisé en ce qu'il comprend une bague (9) de serrage constituée par un câble en un matériau peu extensible de haute résistance à la traction enroulé autour du joint annulaire (5) sur une largeur déterminée de la face externe (5a) dudit joint, ledit câble étant apte à pré-comprimer ce joint annulaire en vue d'entraîner sa déformation suivant une direction préférentielle tendant à exercer une pression élevée sur le bossage (11) de la pièce de fixation et le bourrelet annulaire (8).

19. Dispositif selon l'une des revendications précédentes pour l'accrochage sur une pièce de fixation (2) d'une enveloppe renforcée extérieurement par un réseau de renforts (19) s'étendant longitudinalement le long de cette enveloppe, ledit dispositif étant caractérisé en ce qu'il comprend :
— une jante (14) en matériau rigide ayant une face périphérique externe dotée d'une gorge (15) annulaire,
— des moyens de fixation (17) de la jante sur la pièce de fixation (2) adaptés pour positionner ladite jante concentriquement à la pièce de fixation,
— un collier de serrage (16) disposé dans la gorge annulaire (15) et constitué par un câble en un matériau peu extensible à haute résistance à la traction enroulé à l'intérieur de cette gorge.

## Claims

1. Process for securing an envelope brought about by means of a sheath (1) of flexible material to a fastening fitting of the type consisting
— in the utilisation of a fastening fitting (2) made by means of a rigid material and having an outer peripheral face provided with an annular recess (3),
— in contracting the sheath at the level of the fastening fitting (2) and blocking it by means of a clamping collar (4) in such a manner that it matches the shape of recess (3) of the said fastening fitting, said process being characterised in that
— use is made of a clamping collar (4) made of a material of low extensibility and high tensile resistance, with a cross-section such as to fill the annular recess within a selected depth,
— an annular packing piece (5) extending along the entire circumference of said collar and capable of undergoing radial compressive deformations is arranged in contact with the outer peripheral face (4a) of clamping collar (4), with a view to imparting to the clamping collar a degree of freedom relative to the lateral faces (3a) of recess (3) so as to avoid compressive stressing of said collar.

2. Process according to claim 1 characterised in that the annular packing piece (5) is retained along the entire circumference of its outer peripheral face (5a) by a retaining strap (6) made of a material of low extensibility and high tensile resistance intended to guide the deformation of said annular packing piece in a preferred direction tending to exercise a pressure on the lateral walls (3a) of the annular recess (3).

3. Process according to one of claims 1 or 2, in which the contraction of the sheath at the level of the fastening fitting is brought about thanks to the gathering of a part of said sheath, said process being characterised in that it consists in lining the inner face and the outer face of the part of the sheath intended to be açcomodated within the annular recess (3) with layers for equalising the gathered thickness of the envelope with a view to homogenising the stresses within that envelope.

4. Process according to claim 3 characterised in that each equalisation layer is brought about by hot fusion of foils made from thermoplastic material arranged respectively within the annular recess (3) of the fastening fitting and on the outer face of the gathered envelope.

5. Process according to claim 4 in which the material constituting the envelope is a composite material, the outer face of which consists of a flexible thermoplastic foil, said device being characterised in that the equalisation layer lining the outer face of the envelope is brought about by hot fusion of said thermoplastic foil.

6. Process according to one of the preceding claims applied to securing an envelope to a polar fitting with a view to bringing about superimposed internal envelopes starting from a single sheath positioned within the outer envelope of an aerostatic balloon.

7. Process according to one of claims 2, 3, 4 or 5 for securing the ends of an envelope to a fastening fitting (2), in which a bead (8) is provided at the outer edge of the envelope, said process being characterised in that said bead is held against the outer peripheral face of the fastening fitting by means of the retaining strap (6), blocking of said bead being ensured by the pressure exerted on the head of this bead by the annular packing piece (5).

8. Process according to claim 7 characterised in that the bead (8) is produced by folding the outer edge of the envelope on itself and in several thicknesses.

9. Process according to one of claims 7 or 8 characterised in that a part of the outer peripheral face (5a) of the annular packing piece (5) is kept precompressed by a circular clamping ring (9) made of a material of low extensibility and high tensile resistance, with a view to bringing about a preferred direction for the deformation of the annular packing piece tending to exerta pressure on the head of bead (8) ensuring blockage of the latter.

10. Process according to one of the preceding claims for securing to an annular fastening fitting (2) a network of reinforcements (19) extending longitudinally along an envelope, said process being characterised in that it consists
— in securing the longitudinal reinforcements (19) to a rim (14) of rigid material and having an outer peripheral face provided with an annular recess (15), said rim being secured concentrically about the fastening fitting (2),
— in arranging in the annular recess (15) of rim (14) a clamping collar (16) made from a material of low extensibility and high tensile resistance with a form matching that of the recess (15), with a view to absorbing the longitudinal stresses undergone by the reinforcements (19) due to tensioning of the clamping collar.

11. Process according to one of the preceding claims, characterised in that the clamping collars (4, 16) and the clamping ring (9) are produced by coiling inside respective annular recesses (3, 15) and about the annular packing piece (5) cords made from a material of low extensibility and high tensile resistance.

12. Process according to one of the preceding claims characterised in that the retaining strap (6) is produced by coiling about the annular packing piece (5) a ribbon made from a material of low extensibility and high tensile resistance.

13. Process according to one of the preceding claims applied to the fastening of the ends of the envelope of a space balloon having a generally cylindrical form to a polar fitting.

14. Device for fastening an envelope (1) made by means of a flexible sheath to a fastening fitting (2), said device being of the type comprising
— an annular fastening fitting (2) made from a rigid material and having an outer peripheral face provided with an annular recess (3) intended to serve as a blocking seat for the sheath,
— a clamping collar (4) for the sheath arranged within the annular recess (3), said device being characterised in that
— the clamping collar (4) consists in a cord made from a material of low extensibility and high tensile resistance coiled within and to a selected depth of said recess,
— an annular packing piece (5) is arranged in the recess about the outer peripheral face (4a) of the clamping collar (4),
— a retaining strap (6) is arranged about the annular packing piece (5), said retaining strap (6) consisting in a ribbon made from a material of low extensibility and high tensile resistance coiled about the annular packing piece (5).

15. Device according to claim 14 for securing to a fastening fitting (2) an envelope contracted about said securing fitting thanks to the gathering of a part of the sheath, said device being characterised in that the fastening fitting (2) comprises means for heating (10) arranged close to bottom (3b) of the recess (3) and capable of bringing about fusion of films (7) made from thermoplastic material arranged respectively in said recess and on the outer face of the gathered envelope.

16. Device according to claim 15 characterised in that the means for heating (10) consist in an electrical resistance embedded within the base of the annular recess (3).

17. Device according to one of claims 14, 15 or 16 for securing to a fastening fitting (2) the ends of an envelope provided at the level of its outer edges with an annular bead (8), said device being characterised in that
— the fastening fitting (2) comprises in the extension of one of the lateral faces (3a) of annular recess (3) a boss (11) delimiting on the outer peripheral face of said fastening fitting a groove (12) capable of serving as a seat for the annular bead (8),
— the retaining strap (6) has a width suitable for holding the annular packing piece (5) and the annular bead (8) against the outer peripheral face of fastening fitting (2).

18. Device according to claim 17 characterised in that it comprises a clamping ring (9) consisting in a cord made from a material of low extensibility and high tensile resistance coiled about the annular packing piece (5) to a selected width of the outer face (5a) of said packing piece, said cord being capable of precompressing this annular packing piece with a view to causing its deformation in a preferred direction tending to exercise an increased pressure on boss (11) of the fastening fitting and on the annular bead (8).

19. Device according to one of the preceding claims for securing to a fastening fitting (2) an envelope reinforced on the outside by a network of reinforcements (19) extending longitudinally along this envelope, said device being characterised in that it comprises
— a rim (14) made from a rigid material having an outer peripheral face endowed with an annular recess (15),
— means for securing (17) the rim to the fastening fitting (2) designed to position said rim concentrically in respect of the fastening fitting,
— a clamping collar (16) arranged in the annular recess (15) and consisting in a cord made from a material of low extensibility and high tensile resistance coiled within said recess.

**Patentansprüche**

1. Verfahren, um eine durch eine Hülle (1) aus flexiblem Material gebildete Hülle an einem Befestigungsteil zu befestigen, der Art, die darin besteht :

— daß von einem Befestigungsteil (2), das aus einem starren Material gefertigt wird und eine äußere Umfangsfläche mit einer ringförmigen Aussparung (3) umfaßt, Gebrauch gemacht wird,

— daß man die Hülle im Bereich des Befestigungsteils (2) zusammenzieht und mittels eines Klemmkragens (4) blockiert, so daß sie sich an die Form der Aussparung (3) des besagten Bestigungsteils anpaßt, wobei das besagte Verfahren dadurch gekennzeichnet ist,

— daß man von einem Klemmkragen (4) Gebrauch macht, der aus einem wenig dehnfähigen Material hoher Zugbeständigkeit gefertigt wird, und dessen Querschnitt zum Ausfüllen der ringförmigen Aussparung innerhalb einer festgelegten Tiefe geeignet ist,

— daß man in Berührung mit der äußeren Umfangsfläche (4a) des Klemmkragens (4) eine ringförmige Packung (5) vorsieht, die sich entlang des gesamten Umfangs des besagten Kragens erstreckt und in der Lage ist, radiale Druckverformungen zu ertragen, um dem Klemmkragen im Verhältnis zu den seitlichen Flächen (3a) der Aussparung (3) einen Freiheitsgrad zu vermitteln, der Druckbanspruchung des besagten Kragens vermeidet.

2. Verfahren nach Anspruch 1, dadurch gekennzeichnet, daß die ringförmige Packung (5) entlang des gesamten Umfangs ihrer äußeren Umfangsfläche (5a) durch einen Haltegurt (6) aus einem wenig dehnfähigen Material hoher Zugbeständigkeit in Position gehalten wird, der die Aufgabe hat, die Verformung der besagten ringförmigen Packung in einer bevorzugten Richtung zu steuern, in der die Tendenz zur Ausübung eines Drucks auf die Seitenwände (3a) der ringförmigen Aussparung (3) besteht.

3. Verfahren nach einem der Ansprüche 1 oder 2, bei dem das Zusammenziehen der Hülle im Bereich des Befestigungsteils infolge der Raffung eines Teils der besagten Hülle bewirkt wird, wobei das besagte Verfahren dadurch gekennzeichnet ist, daß es in der Beschichtung der inneren Fläche und der äußeren Fläche des Hüllenteiles, der zur Einbettung in die ringförmige Aussparung (3) bestimmt ist, mit Schichten zum Ausgleich der gerafften Dicke der Hülle besteht, um die innerhalb der besagten Hülle bestehenden Spannungen auszugleichen.

4. Verfahren nach Anspruch 3, dadurch gekennzeichnet, daß jede Ausgleichsschicht durch das Verschmelzen im heißen Zustand von Folien aus thermoplastischem Stoff erzielt wird, die innerhalb der ringförmigen Aussparung (3) des Befestigungsteils bzw. an der Außenfläche der gerafften Hülle angeordnet sind.

5. Verfahren nach Anspruch 4, bei dem das die Hülle bildende Material ein Verbundstoff ist, dessen Außenfläche in einer flexiblen thermoplastischen Folie besteht, wobei die besagte Vorrichtung dadurch gekennzeichnet ist, daß die die Außenfläche der Hülle beschichtende Ausgleichsschicht durch Verschmelzen im heißen Zustand der besagten thermoplastischen Folie erzielt wird.

6. Verfahren nach einem der vorstehenden Ansprüche, angewandt auf das Befestigen einer Hülle an ein Polstück, um von einer einzigen im Innern der äußeren Hülle eines aerostatischen Ballons angeordneten Hülle ausgehend überlagerte innere Hüllen zu erstellen.

7. Verfahren nach einem der Ansprüche 2, 3, 4 oder 5, zum Befestigen der Enden einer Hülle an ein Befestigungsteil (2), bei dem ein Wulst (8) am äußeren Rand der Hülle hergestellt wird, wobei das besagte Verfahren dadurch gekennzeichnet ist, daß der besagte Wulst mit Hilfe des Haltegurtes (6) gegen die äußere Umfangsfläche des Befestigungsteils gehalten wird, wobei die Blockierung des besagten Wulstes durch den auf den Kopf dieses Wulstes durch die ringförmige Packung (5) ausgeübten Druck gewährleistet wird.

8. Verfahren nach Anspruch 7, dadurch gekennzeichnet, daß der Wulst (8) durch Falten des Außenrandes der Hülle an sich selbst und in mehreren Dicken gebildet wird.

9. Verfahren nach einem der Ansprüche 7 oder 8, dadurch gekennzeichnet, daß ein Teil der äußeren Umfangsfläche (5a) der ringförmigen Packung (5) durch einen kreisförmigen Klemmring (9) im vorverdichteten Zustand erhalten wird, wobei der besagte Klemmring aus einem wenig dehnfähigen Material hoher Zugbeständigkeit gefertigt wird, um eine bevorzugte Verformungsrichtung der ringförmigen Packung zu bewirken, in der die Tendenz zur Ausübung eines Drucks auf den Kopf des Wulstes (8) besteht, der dessen Blockierung gewährleistet.

10. Verfahren nach einem der vorstehenden Ansprüche zum Befestigen an einem ringförmigen Befestigungsteil (2) eines Netzwerks von Verstärkungen (19), das sich der Länge nach entlang einer Hülle erstreckt, wobei das besagte Verfahren dadurch gekennzeichnet ist, daß es

— im Befestigen der Längsverstärkungen (19) an eine Felge (14) aus starrem Material und mit einer äußeren Umfangsfläche mit einer ringförmigen Aussparung (15) besteht, wobei die besagte Felge konzentrisch um den Befestigungsteil (2) angeordnet ist,

— daß innerhalb der ringförmigen Aussparung (15) der Felge (14) ein Klemmkragen (16) angeordnet wird, der aus einem wenig dehnfähigen Material hoher Zugbeständigkeit besteht und dessen Form an die Aussparung (15) angepaßt ist, um die durch die Verstärkungen (19) infolge der Spannungsbeaufschlagung des Klemmkragens bedingten Längsspannungen aufzunehmen.

11. Verfahren nach einem der vorstehenden Ansprüche, dadurch gekennzeichnet, daß die Klemmkragen (4, 16) und der Klemmring (9) durch das Wickeln im Innern der betreffenden ringförmigen Ausparungen (3, 15) und rings um die ringförmige Packung (5) von Leinen aus einem wenig dehnfähigen Material hoher Zugbeständigkeit erzeugt werden.

12. Verfahren nach einem der vorstehenden Ansprüche dadurch gekennzeichnet, daß der Haltegurt (6) durch Umwickeln der ringförmigen Packung (5) mit einem Band aus einem wenig dehnfähigen Material hoher Zugbeständigkeit erzeugt wird.

13. Verfahren nach einem der vorstehenden Ansprüche, angewandt auf das Befestigen der Enden der Hülle eines Raumballons allgemein zylindrischer Form an ein Polstück.

14. Vorrichtung zum Befestigen einer durch eine flexible Hülle gebildeten Hülle (1) an einem Befestigungsteil (2), wobei die besagte Vorrichtung von der Art ist,
— die einen ringförmigen Befestigungsteil (2) aus einem starren Material und mit einer äußeren Umfangsfläche mit einer ringförmigen Aussparung (3) umfaßt, wobei die besagte Aussparung als Blockierungssitz der Hülle dient,
— einen Kragen (4) zum Klemmen der innerhalb der ringförmigen Aussparung (3) angeordneten Hülle umfaßt, wobei die besagte Vorrichtung dadurch gekennzeichnet ist,
— daß der Klemmkragen (4) aus einer Leine aus wenig dehnfähigem Material hoher Zugbeständigkeit besteht, die im Innern und innerhalb einer festgelegten Tiefe der besagten Aussparung gewickelt ist,
— daß eine ringförmige Packung (5) rings um die äußere Umfangsfläche (4a) des Klemmkragens (4) innerhalb der Aussparung angeordnet ist,
— daß ein Haltegurt (6) rings um die ringförmige Packung (5) angeordnet ist, wobei der besagte Haltegurt (6) aus einem Band aus wenig dehnfähigem Material hoher Zugbeständigkeit besteht, das rings um die ringförmige Packung (5) gewickelt ist.

15. Vorrichtung nach Anspruch 14 zum Befestigen an einen Befestigungsteil (2) einer infolge der Raffung eines Teiles des Hülle rings um den besagten Befestigungsteil zusammengezogenen Hülle, wobei die besagte Vorrichtung dadurch gekennzeichnet ist, daß der Befestigungsteil (2) Mittel zur Erwärmung (10) umfaßt, die sich in der Nähe des Bodens (3b) der Aussparung (3) befinden und so beschaffen sind, daß sie die Verschmelzung von Folien (7) aus thermoplastischem Material innerhalb der besagten Aussparung bzw. an der Außenfläche der gerafften Hülle bewirken.

16. Vorrichtung nach Anspruch 15, dadurch gekennzeichnet, daß die Mittel zur Erwärmung (10) in einem im Boden der ringförmigen Aussparung (3) eingebetteten elektrischen Widerstand bestehen.

17. Vorrichtung nach einem der Ansprüche 14, 15 oder 16 zum Befestigen der Enden einer im Bereich ihrer Außenränder mit einem ringförmigen Wulst (8) versehenen Hülle an einem Befestigungsteil (2), wobei die besagte Vorrichtung dadurch gekennzeichnet ist,
— daß der Befestigungsteil (2) in der Verlängerung einer der Seitenflächen (3a) der ringförmigen Aussparung (3) einen Vorsprung (11) umfaßt, der an der äußeren Umfangsfläche des besagten Befestigungsteils eine Nut (12) abgrenzt, die so beschaffen ist, daß sie als Sitz des ringförmigen Wulstes (8) dient,
— daß der Haltegurt (6) die nötige Breite hat, um die ringförmige Packung (5) und den ringförmigen Wulst (8) gegen die äußere Umfangsfläche der Befestigung (2) zu halten.

18. Vorrichtung nach Anspruch 17, dadurch gekennzeichnet, daß sie einen Klemmring (9) umfaßt, der in einer Leine aus wenig dehnfähigem Material hoher Zugbeständigkeit besteht, die rings um die ringförmige Packung (5) gewickelt ist, und zwar in einer festgelegten Breite der äußeren Fläche (5a) der besagten Packung, wobei die besagte Leine so beschaffen ist, daß sie diese ringförmige Packung vorverdichtet, um ihre Verformung in einer bevorzugten Richtung zu bewirken, in der die Tendenz zur Ausübung eines erhöhten Drucks auf den Vorsprung (11) des Befestigungsteils und den ringförmigen Wulst (8) besteht.

19. Vorrichtung nach einem der vorstehenden Ansprüche zum Befestigen an einem Befestigungsteil (2) einer Hülle, die an der Außenseite durch ein sich der Länge nach entlang dieser Hülle erstreckendes Netzwerk von Verstärkungen (19) verstärkt ist, wobei die besagte Vorrichtung dadurch gekennzeichnet ist,
— daß sie eine Felge (14) aus starrem Material mit einer äußeren Umfangsfläche umfaßt, die mit einer ringförmigen Aussparung (15) versehen ist,
— daß sie Mittel zum Befestigen (17) der Felge an dem Befestigungsteil (2) umfaßt, die so beschaffen sind, daß die besagte Felge konzentrisch zu dem Befestigungsteil angeordnet wird,
— daß sie einen Klemmkragen (16) umfaßt, der in der ringförmigen Aussparung (15) angeordnet ist und in einer Leine aus einem wenig dehnfähigen Material hoher Zugbeständigkeit besteht, die im Innern dieser Aussparung gewickelt ist.

Fig. 1

Fig. 2

Fig. 3

Fig. 4

0 197 570